Europäisches Patentamt

European Patent Office

Office européen des brevets

(11) Publication number: **0 071 036**
**B1**

(12) **EUROPEAN PATENT SPECIFICATION**

(45) Date of publication of patent specification: **13.11.85**

(51) Int. Cl.⁴: **B 01 J 3/06, C 04 B 35/38**

(21) Application number: **82105907.8**

(22) Date of filing: **02.07.82**

(54) **Process for making diamond and cubic boron nitride compacts.**

(30) Priority: **27.07.81 US 287010**

(43) Date of publication of application:
**09.02.83 Bulletin 83/06**

(45) Publication of the grant of the patent:
**13.11.85 Bulletin 85/46**

(84) Designated Contracting States:
**AT BE CH DE FR GB IT LI NL SE**

(56) References cited:
**DE-A-3 044 945**
**US-A-3 850 591**
**US-A-4 255 165**

**CHEMICAL ABSTRACTS, vol.82, no.8, 21st April 1975, page 300, no. 102372h, Columbus, Ohio, USA**

(73) Proprietor: **GENERAL ELECTRIC COMPANY**
**1 River Road**
**Schenectady New York 12305 (US)**

(72) Inventor: **Gigl, Paul Donald**
**393 Pittsfield Drive**
**Worthington Ohio 43085 (US)**

(74) Representative: **Catherine, Alain et al**
**General Electric - Deutschland Munich Patent Operations Frauenstrasse 32**
**D-8000 München 5 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Description

This invention is related to the high pressure/ high temperature (HP/HT) process for making cubic boron nitride and diamond compacts. More particularly, it is related to a modification of the HP/HT process which can result in increased efficiency in the production of small compacts and in new types of compacts with improved characteristics.

A compact is a polycrystalline mass of abrasive particles (e.g. diamond and cubic boron nitride) bonded together to form an integral, tough, coherent, high-strength mass. A composite compact is a compact bonded to a substrate material, such as a cemented, metal carbide (e.g. cobalt cemented tungsten carbide). The metal bonded carbide mass is generally selected from the group consisting of tungsten carbide, titanium carbide, tantalum carbide and mixtures thereof with metal bonding material therein normally being present in a quantity from about 6 to 25 weight percent and selected from the group consisting of cobalt, nickel, iron and mixtures thereof.

Compacts or composite compacts may be used as blanks for cutting tools, drill bits, dressing tools, and where parts. Compacts made in a cylindrical configuration have been used to make wire drawing dies (see U.S. Patents 3,831,428; 4,129,052; and 4,144,739).

One method for manufacturing compacts involves the steps of:

A. placing within a protective shield metal enclosure which is disposed within the reaction cell of a high pressure/high temperature apparatus:
  (1) a mass of abrasive crystals (either diamond or cubic boron nitride (CNB)); and
  (2) a mass of catalyst metal in contact with the mass of abrasive crystals; and

B. subjecting the contents of the cell to conditions of temperature, pressure and time sufficient to give intercrystal bonding between adjacent crystal grains.

For example, the mass of catalyst metal could be in the form of a disc of one of the well known catalysts for diamond or CBN crystallization. Under the HP/HT conditions, a compaction front advances through the dense diamond or CBN material, and the catalyst metal (in liquid form) makes itself available as a catalyst or solvent for recrystallization or intercrystalline bonding of the diamond or CBN grains. This process is sometimes known as the sweep through method, i.e., the catalyst sweeps through the diamond or CBN mass.

The relative shapes of the abrasive mass and catalyst can be varied. For example, the mass of diamond or CBN can be cylindrical, and the catalyst can be an annular shape surrounding the cylinder of abrasive crystals.

The source of catalysts may also be cemented metal carbide or carbide molding powder wherein the cementing agent is a catalyst or solvent for diamond or CBN recrystallization or growth.

The catalyst is generally selected from cobalt, nickel and iron or aluminum alloy in the case of CBN. The catalyst may be mixed with the abrasive crystals in addition to or instead of being a separate mass adjacent to the abrasive crystals.

Also, in place of abrasive grains such as diamond or CBN, one may choose to utilize as raw materials other sources of carbon or boron nitride such as graphite, hexagonal boron nitride or wurtzite boron nitride which would be converted to diamond or CBN respectively during the HP/HT process. Processes for such conversions are described in the patent literature, for example, U.S. Patent 3,407,445 and 3,850,053 (for diamond) and British Patent 1,317,716, U.S. Patents 3,212,852 and 4,188,194 and US—A— 4289503 (for CBN), all of which are hereby incorporated by reference.

High temperature and high pressure in the diamond or CBN stable region are then applied for a time sufficient to bond the abrasive crystals together. The resulting compact is characterized particularly by diamond-to-diamond or CBN-to-CBN bonding, i.e., intercrystal bonding between adjacent grains whereby there are parts of the crystal lattice which are shared between neighboring crystals (resulting from recrystallization at HP/HT conditions). Methods for making diamond compacts are detailed in U.S. Patents 3,141,746; 3,745,623; 3,609,818; and 3,850,591; and processes for CBN compacts are disclosed in U.S. Patents 3,233,988; 3,743,489; 3,767,371; and 4,188,194 (all of which are incorporated herein by reference).

The manufacture of thermally stable compacts is described in U.S. Patent 4,224,380. This patent teaches the removal of substantially all of the metallic (catalyst) phase from compacts to yield a compact consisting essentially of self-bonded abrasive particles with an interconnected network of pores dispersed throughout. Such compacts can withstand exposure to temperatures of about 1200°C to 1300°C without substantial thermal degradation, an advantage over the compacts of, for example, U.S. Patent 3,745,623 which are thermally degraded at a temperature between 700°C and 800°C. The metallic phase is removed by acid treatment, liquid zinc extraction, electrolytic depletion, or similar processes. The compacts of this type will be referred to throughout as thermally stable compacts.

The current manufacturing methods of thermally stable compacts require a post pressing step, such as laser cutting, grinding, or lapping, for shaping each piece to the desired configuration, (e.g. triangular or segment of a circle). This consumes time, labor and materials. Since diamond is the hardest known material and CBN the second hardest, the polycrystalline mass is most difficult to shape. The shaping step, whether by laser cutting, dicing with a diamond wheel, or other method, requires labor intensive handling for each final piece. This adds to the cost, logistics and time required to manufacture the product. The crushing or milling of large polycrystalline pieces is not a viable method because the shape cannot be controlled and only a small percentage of the desired particle size is obtained. The problem is, therefore, to eliminate the individual handling requirements for each piece while maintaining the desired shape of the pieces.

U.S. Patent 3,949,062 describes one method for producing diamond compacts of a predetermined shape by surrounding a monolithic piece of graphite of a predetermined shape with catalyst and transforming it into polycrystalline diamond through a high pressure/high temperature process using a pulse of electric current.

U.S. Patent 3,785,093 proposes making sintered diamond and cermet mixtures by exposing such mixtures to conditions within the graphite (non-diamond) stable region while contained within graphite shells which are in turn contained within shells made of low melting metals (e.g. zinc).

The diamond stable region is the range of pressure temperature conditions under which diamond is thermodynamically stable. On a pressure-temperature phase diagram, it is the high pressure side, above the equilibrium line between diamond and graphite. The cubic boron nitride stable region is the range of pressure temperature conditions under which cubic boron nitride is thermodynamically stable. On a pressure-temperature phase diagram, it is the high pressure side, above the equilibrium line between cubic boron nitride and hexagonal boron nitride.

In the case of normal (i.e. non-thermally stable) diamond or CBN compacts, there is another problem connected with their use, not the manufacturing finishing steps. Diamond and CBN compacts, such as those manufactured by the catalyst sweep through method, are very strong but very brittle materials. Once started, fractures can propagate through the diamond or CBN mass. The chips formed can be quite large and can limit the usefulness of the material. This is particularly true in the case of petroleum or rock drill bits where massive failure of the diamond layer of a composite compact can also lead to damage of the remaining cutters on the bit. A technique is needed which would reduce the massive failure caused by fractures propagating through a well bonded polycrystalline brittle material such as the diamond layer of compact cutters used in petroleum drill bits.

U.S. Patent 4,255,165 describes a modification of composite compacts in which at least two cemented metal carbide masses are bonded to and interleaved with at least two masses of polycrystalline diamond or CBN. This modification is said to provide internal reinforcement of the composite compact against massive fracture by enhancing resistance to crack propagation.

U.S. Patents 4,063,909 and 4,108,614 as well as EP—A—1184 disclose interposing a transition metal layer between the diamond particles and metal carbide of various types of composite compacts during manufacture.

British patent 1,568,202 discloses laminated compacts in which bonding between adjacent diamond layers takes place through a metal or alloy layer.

The difficulties discussed above can, to a great extent, be alleviated by embedding within the mass of abrasive crystals, before HP/HT sintering, at least one partition strip of a deformable material (e.g., metal or metal alloy) which extends through the shortest dimension of the abrasive crystal mass or layer. The strips may be oriented so as to segment or subdivide the abrasive crystal mass. In the cylindrical high pressure apparatus often used to make compacts, the strips are oriented longitudinally or parallel to its axis.

The partition strips should be deformable or pliable so that there is no bridging action or resistance by the partitions to the compression of the abrasive crystal mass. The abrasive crystal mass loses some of its volume (about 30%) during the compression of the HP/HT process, which loss must be accommodated. The partition strips should also be strong enough to maintain segregation between the portions of the subdivided abrasive crystal mass.

The partition strips may be in any convenient form, such as: flat strips, wire mesh, expanded metal, tubes, or closed shapes fabricated from flat metal pieces (e.g. triangle or star shape). The closed shapes described discrete volumes within the abrasive crystal mass. The partition strips can be any catalyst or inert pliable material which does not interfere with the sintering sweep through mechanism and which can be easily removed by post pressing operations.

The partition strips are placed in the typical shield metal cup of the normal compact manufacturing process. The cup is then filled with diamond or CBN and, in the case of composite compacts, covered with a cemented metal carbide piece or carbide molding powder.

The uniqueness of this invention is based on the following discoveries:

1. When metal pieces which describe closed shapes (e.g. tubes in the shape of circles, triangles rectangles, squares or stars) are used, the compact formed within the closed shape is maintained as a circle, triangle, rectangle, square or star after compression even though the diamond or CBN was in a molten metal envelope during the HP/HT process.

2. Group VIII metals of the first transition series, which are readily available, can be used as the deformable metal strip or partition material between the CBN or diamond masses. When the reaction volume is compressed to HP conditions and then heated to sweep through temperature, the pore volume in the diamond or CBN is filled with molten catalyst metal, and the metal strip or partition remains in position. Of course, there is diffusion and alloying with the partition metal but the minimum volume will have already been obtained through the packing down and compression of the abrasive crystals, and separation of the compacted shapes or crystal masses is maintained.

3. The melting points of the materials within the reaction volume appear to be the controlling parameters when catalyst assisted sintering occurs. When the partition or metal strip material is not a catalyst or solvent, it must have a melting point, under conditions present in the reaction zone of the HP/HT cell, at least slightly higher (e.g. 20°C higher) than the catalyst melting point. This is to prevent the partition strip from melting and becoming mobile before catalyst sweep through occurs. In that event, the catalyst would be blocked by the partition strip material which would have swept through the diamond or CBN ahead of the catalyst. When catalyst solvent materials are used for the partitions, that is not a great concern.

It must be recognized that although the melting point of a material may be below the catalyst melting point at atmospheric pressure, it can be different at greatly elevated pressures and in the presence of diamond or graphite. For example, nickel melts below the melting point of cobalt normally, but at HP/HT conditions in the presence of diamond, nickel melts or forms a eutectic at about 1394°C while the corresponding cobalt diamond eutectic occurs at about 1317°C. See Strong, H. M. and Tuft, R. E., "The Cobalt-Carbon System at 56 Kilobars", General Electric Company Technical Information Series, July, 1974; and Strong H. M. and Hanneman, R. E., "Crystallization of Diamond and Graphite", *The Journal of Chemical Physics,* Vol. 46, pp. 3668—3676, (May, 1967).

4. The partition or metal strip material should be pliable or deformable in order to allow for diamond or CBN crystal compaction and the transmission of pressure more efficiently. When stiff preformed cemented carbide was used as a barrier or metal strip, efficient sintering was difficult because the relatively imcompressible carbide walls hindered pressure transmission to the abrasive crystals.

This improved process permits the pressing of diamond or CBN compacts to the desired shape with little or no finishing steps required. A compact is removed from the high pressure apparatus, and the shield metal sleeve and any adhering metal from the shield metal cup or disc are removed in the usual manner (e.g., peeling off, grinding or lapping). At this point, the compacts comprise polycrystalline diamond or CBN having embedded therein one or more pieces of material in basically the same shape as the partition strips which were placed into the reaction volume of the high pressure cell. Where thermally stable compacts are desired, the compacts recovered from the cell are further treated by the process of U.S. Patent 4,224,380. For example, they could be contacted first with a hot medium comprising nitric acid and hydrofluoric acid and secondly with a hot medium comprising hydrochloric acid and nitric acid (see example III of U.S.P. 4,224,380). By exposing the compacts to this bulk acid treatment, the embedded partition strips are removed and the compact discs are separated into smaller compacts of the various shapes described by the partition strips (e.g., cylinders, triangles, semicircles, etc.). Besides having these predetermined shapes, the smaller compacts are thermally stable as a result of the bulk acid treatment.

Mechanical removal of the partition strips is also possible by grit blasting, for example. However, the acid treatment is preferred because it is simple and is the same technique used to remove the infiltrated catalyst (e.g., cobalt) in the polycrystalline mass in order to obtain thermally stable compacts. This invention provides an efficient and practical method for the manufacture of thermally stable compacts. There are no shaping or cutting operations needed. Only the metal removal step by bulk acid treatment is required. Individual handling is virtually eliminated. This process improvement allows many pieces to be nested together in one high pressure cell and treated as a group during HP/HT operations. This is generally a less expensive and more convenient method of obtaining compacts in the desired shape than the conventional methods (e.g. laser and electrical discharge machining). In fact, it is referred to as "press to shape".

In the case where one does not perform the bulk acid treatment, the embedded partition strips (placed in non-working areas within the sintered mass) remain and serve as chip arresters which limit the movement of fractures within the polycrystalline diamond or CBN. The configuration of the strips will depend upon the maximum size chip allowable. The compact blanks are shaped as usual.

Fig. 1 is an elevation view in section of an HP/HT reaction cell as modified by the improvement of the invention.

Fig. 2 is a perspective view of one of the shield metal cups from the cell in Fig. 1.

Fig. 3 is a plan view section taken through the reaction cell where indicated.

Fig. 4 is a plan view similar to Fig. 3, except that the partition strips are circular tubes instead of triangular tubes.

Fig. 5 depicts a composite compact in perspective, showing the chip arresters which are part of the invention.

The feasibility of placing partitions within the sintered diamond mass was first tested in the cobalt sweep through process by embedding molybdenum, Monel nickel copper alloy (Monel is a trademark of International Nickel Co.) and stainless steel wire mesh into the diamond powder in a composite compact tool blank cell. The results confirmed the possibility of of the partition strip method. Molybdenum and the Monel nickel copper alloy exhibited acceptable results, but stainless steel had delamination and chippage problems. The latter situation was the result of the steel reacting with the protecting shield metal cup and allowing the salt to penetrate and contaminate the diamond.

Tantalum and titanium tubes (0.200 inch or 5.08 mm outside diameter) were cut into 3.81 mm lengths, placed in the normal zirconium shield metal cups, filled with diamond powder (about 6—8 microns largest dimension) covered with cobalt catalyst discs and loaded in a HP/HT reaction cell. Using this method with tubes of different shapes, cylindrical, triangular, and star shaped pieces were obtained.

After those runs, nickel, iron and zirconium tubes with 1.6 mm internal diameter were cut to length, loaded with diamond in typical HP/HT cells and pressed. The nickel tubing appears to be very compatible with the cobalt catalyst sweep through method. Zirconium is acceptable but more expensive.

Ultimate compression tests of leached samples from the iron and nickel partition runs were made, and the results are $8.30 \times 10^5$ psi ($5.72 \times 10^6$ kilopascals (kPa)) for the nickel partition and $7.40 \times 10^5$ psi ($5.10 \times 10^6$ kPa) for the iron partition pieces. Both numbers are an average of ten tests and had values to $10^6$ psi ($6.89 \times 10^6$ kPa).

Thus, the preferred partition materials, when using cobalt catalyst sweep through are iron and nickel, nickel being the most preferred. The materials which can be used are those from Groups III B, IV B, V B, VI B, VII B, and VIII of the periodic table and their alloys. Stainless steel is also acceptable if isolated from the shield metal cup. Although it is feasible to use cobalt itself or lower melting catalyst solvent (e.g. Invar iron-nickel alloy) materials as partitions, they are not preferred.

In the case of closed shaped partitions, the use of smooth-sided (e.g. continuous drawn) tubes may give more pieces per cell with the thinner tube walls.

A further aspect of this invention is the bonding together of several partitions describing closed shapes into a bundle. Sections can be severed from the bundle, which sections resemble a honeycomb. These honeycomb partition bundles represent an efficient means of packing the maximum number of partition strips for discrete small compacts into a given cell volume.

Such bundles may be made by diffusion bonding individual closed shapes together. Diffusion bonding is a method for attaching two or more metal shapes by thermally cycling the pieces which are in contact with each other to a temperature high enough to allow the metal to bond by solid state diffusion but not high enough to distort the shapes of the pieces. The materials are never brought to their melting point nor are they held at temperature long enough to promote volume or shape changes. The result is an integral unit composed of a plurality of the starting shapes. This unit can be cut to the desired thickness and used as a partition. This eliminates the need of individually handling the many small partitions when loading a high pressure cell.

For example, a multiplicity of nickel (melting point 1453°C) tubes can be bonded into a structural unit by heating in a vacuum to 1200°C for ten minutes. A quantity of clean nickel tubes (placed inside a hollow graphite rod in a vacuum furnace) is heated to 1200°C under vacuum. A carbon coating is deposited on the tubes by introducing methane unto the furnace (allowing vacuum to drop to about 28 in. Hg. gauge pressure) and allowing it to remain for about five minutes. Full vacuum and 1200°C conditions are resumed, followed by a second introduction of methane, after which the furnace is allowed to cool and the tube bundle is removed.

The serving of sections from the tube bundle is conveniently done by wire electrical discharge machining (EDM). The carbon coating on the tubes helps to prevent distortion of very thin wall tubing during the wire EDM cutting. In the case of tubes having a wall thickness substantially greater than two mils, the carbon coating is not required to prevent distortion.

One preferred form of a HP/HT apparatus in which the compacts of this invention may be prepared is the subject of U.S. Patent No. 2,941,248 (incorporated herein by reference) which is called a belt apparatus. It includes a pair of opposed cemented tungsten carbide punches and an intermediate belt or die member of the same material. The die member includes an aperture in which there is positioned a reaction vessel shaped to contain a charge assembly. Between each punch and the die there is a gasket assembly comprising a pair of thermally insulating and electrically nonconducting pyrophyllite members and an intermediate metallic gasket.

The reaction vessel, in one preferred form, includes a hollow salt cylinder. The cylinder may be of another material, such as talc, which (1) is not converted during HP/HT operation to a stronger, stiffer state (as by phase transformation and/or compaction) and (b) is substantially free of volume discontinuities occurring under the application of high temperatures and pressures, as occurs, for example with pyrophyllite and porous alumina. Materials meeting the other criteria, set forth in U.S. Patent No. 3,030,662 (Col. 1, 1.59-Col. 1, 1.2, incorporated herein by reference) are useful for preparing the cylinder.

Positioned concentrically within and adjacent to the cylinder is a graphite electrical resistance heater tube. Within the graphite heater tube, there is concentrically positioned a cylindrical salt liner. The ends of the liner are fitted with salt plugs disposed at the top and the bottom.

Electrically conductive metal end discs are utilized at each end of the cylinder to provide electrical connection to the graphite heater tube. Adjacent to each disc is an end cap assembly each of which comprises a pyrophyllite plug or disc surrounded by an electrically conducting ring.

Operational techniques for simultaneously applying both high pressures and high temperatures in this type of apparatus are well known to those skilled in the super-pressure art.

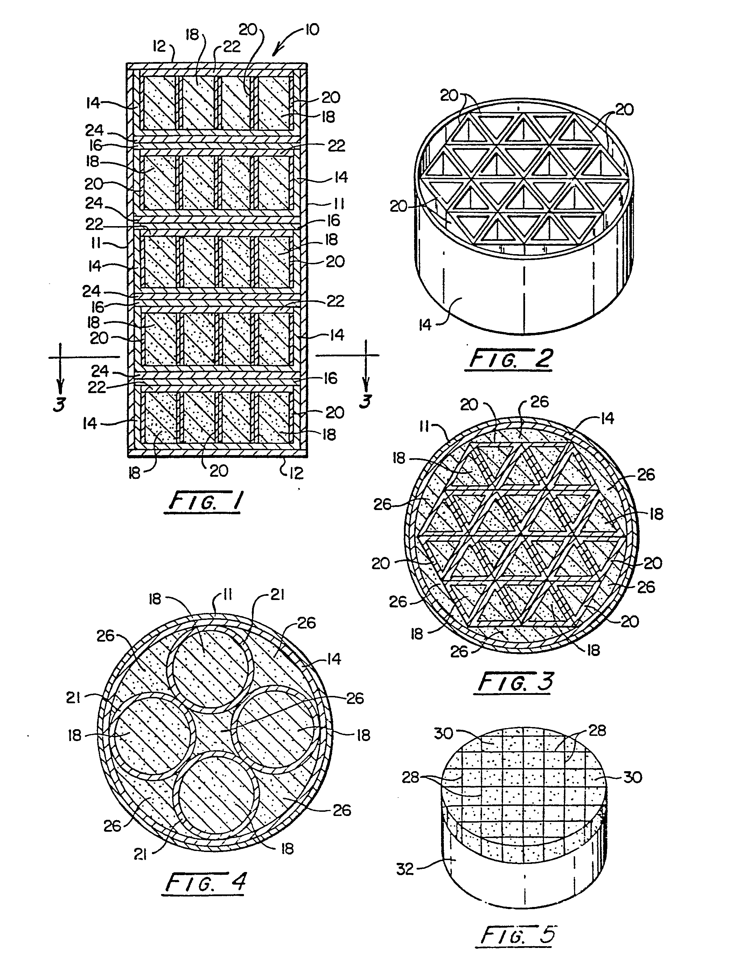

Referring to Fig. 1, the charge (or reaction zone) assembly 10 fits within the space defined by the salt liner and the salt plugs. The assembly consists of a cylindrical sleeve 11 and end caps 12 of shield metal selected from the group consisting of zirconium, titanium, tantalum, tungsten and molybdenum. Within the shield metal sleeve are one or more sub-assemblies each defined by a shield metal disc 16 and a shield metal cup 14.

A mass of abrasive crystals 18 (diamond, CBN or mixtures thereof) is disposed within the cavity defined by the cup and the disc. This mass may also contain graphite and/or a metal catalyst. A disc of catalysts solvent (e.g. cobalt) 22 is shown on top of the abrasive crystal mass, just underneath the shielded metal disc.

The number of sub-assemblies within the reaction zone can be varied and is not critical. In Fig. 1, five sub-assemblies are shown and each one is separated by a separator disc 24 made of an inert material such as dehydrated mica.

If composite compacts are desired, a mass of sintered metal bonded carbide (e.g. titanium, tungsten, or tantalum carbide) or carbide powder with appropriate metal bonding medium (e.g. cobalt, iron or nickel) would also be placed within the sub-assemblies. In Fig. 1 this would appear as a disc or layer either on top of or underneath the abrasive crystal mass 18. The manufacture of composite compacts is well known, and more details may be found in U.S. Patent 3,745,623.

The partition strips of this invention are shown as elements 20 in the sub-assemblies. In the particular embodiment of Figs. 1—3, the partition strips are triangular shapes which have been diffusion bonded together into a honeycomb pattern as described above. Fig. 2 shows clearly how the honeycomb partitions are placed into the shield metal cup during cell assembly.

Fig. 3 shows how the individual triangular masses of abrasive crystals 18 are segregated. The abrasive grains which are outside of the tubular partitions will be designated interstitial diamond or CBN 26.

Fig. 4, of course, shows a variant of the partition shapes which utilizes four cylindrical tubes 21 rather than triangular shapes.

Another possible variation is to effectively double the number of compacts made in a given sub-assembly by placing a refractory metal disc (e.g. zirconium) midway through the sub-assembly. For example, such a zirconium disc would appear in a sub-assembly in Fig. 1 as a horizontal element dividing a given sub-assembly into top and bottom halves. Of course, the partition tubes would also be split in half. This technique will work if the catalyst solvent discs are placed one on either side of the zirconium disc or if the catalyst disc 22 remains where it is shown in Fig. 1.

Any unused volume within the charge assembly may be taken up with a disc made of the same material as the salt cylinder (e.g., sodium chloride) and discs made of hexagonal boron nitride to minimize the entry of undesirable substances into the sub-assembly defined by the shield metal disc and cup.

Typical conditions for the HP/HT process are:
(1) for diamond
    (a) a pressure of at least 50 kbars at a temperature of at least 1300°C and within the diamond stable region; and
    (b) a reaction time of 3—120 minutes;
(2) for cubic boron nitride
    (a) a pressure of at least 42 Kbars at a temperature of at least 1300°C and within the cubic boron nitride stable region; and
    (b) a reaction time of about 2—120 minutes.

The charge assembly is loaded into the reaction vessel which is placed in the HP/HT belt apparatus. First, the pressure and then the temperature are increased and held at the desired conditions for sufficient time for sintering to occur. It is important that the apparatus be brought to operating temperature only after operating pressure has been reached. If temperature is brought above the melting point of the catalyst before operating pressure has been reached, the sweep through would be commenced prematurely. The sample is then allowed to cool under pressure for a short period of time, and finally the pressure is decreased to atmospheric pressure, and the compact is recovered.

As stated in the background section, compacts may also be made using other carbon or boron nitride sources such as graphite, hexagonal boron nitride (HBN) or wurtzite boron nitride (WBN) as raw materials instead of diamond or CBN. When processed in accordance with the patents listed in the background section, these raw materials are converted into compacts. The processes are HP/HT processes using apparatus similar to that described above. The operating conditions are typically:
    for graphite—50—62 kilobars, 1200—1600°C, for 30 seconds to 40 minutes time, in the presence of nickel or cobalt catalyst;
    for HBN—50—150 kilobars, 1800—3000°C, for 1 to 30 minutes; and
    for WBN—suitable conditions are found in U.S. Patent 3,876,751 which is incorporated herein by reference (e.g. 50—300 kbars, 1900—2500°C, for 1 to 7 minutes.

The use of the partition strip improvement of this invention is also applicable when using these raw materials. One may use graphite or hexagonal boron nitride in the form of powder or pellets. It is also feasible to machine graphite or HBN rods to the shape which would fit within the space defined by the partition strip and the shield metal cup. There would be more volume change during the HP/HT process using these raw materials than there is either in the case of diamond or CBN, since there is an increase in density due to the phase change as well as the physical packing. This only serves to emphasize the importance of pliability in the partition strip material.

As stated earlier, after removal of any adhering cell materials from the compacts resulting from the HP/HT process, the recovered compacts comprise the polycrystalline mass of abrasive grains bonded together having embedded within the mass the partition strips, basically in the same shape as they were placed into the sub-assembly. Thus, for the charge assembly of Figs. 1—3, the compacts at this point would resemble Fig. 3 without elements 11 and 14, the polycrystalline material and the partition strips being one integral mass. In order to make thermally stable compacts, this mass could be contacted first with a hot medium comprising nitric and hydrofluoric acids and contacting it subsequently with a second hot medium comprising hydrochloric and nitric acids. Substantially all of the partition strip and catalyst solvent material infiltrated into the compact body would be removed by this process if it were carried out for a sufficient length of time in accordance with the teaching of U.S. Patent 4,224,380. The result would be 24 small triangular, thermally stable compacts per sub-assembly and 120 such compacts made per HP/HT run.

Fig. 5 represents a composite compact made with a plurality of partition strips 28 arranged in a cross hatched pattern through the abrasive crystal layer. In applications such as rock drill bits, the size of chips knocked from the compact cutters would be limited by the embedded chip arresters (partition strips) to the shapes (e.g. small squares) described by the chip arrester configuration. Thus, for example, such a chip might be limited to a single piece 30 from the diamond layer rather than a massive portion of the whole layer.

Iron, nickel, and cobalt are the preferred metals for such chip arresters because they are relatively inexpensive, readily available, and do not form strong carbides like the refractory metals do. In the case of refractory metals, fractures may propagate more easily and continue into the neighboring sub-parts of the polycrystalline mass.

If desired, any exposed partition strips at the face or edge of a compact may be removed by grit blasting or selective etching in order to produce multiple, free standing polycrystalline diamond or CBN zones on the tool blank.

Another alternative would be to extend the chip arresters or partition strips into the cemented metal carbide substrate 32 of a composite compact during processing. This would effectively reduce chip propagation in the substrate. However, this technique may not work as effectively as the chip arrester concept in the diamond or CBN layer because metals such as nickel, cobalt and iron would probably diffuse into the metal carbide structure and, in the case of refractory metals, brittle carbides would probably be formed which would reduce their chip arresting properties.

**Claims**

1. In a process for preparing a compact which comprises:

A. Subjecting a mass of abrasive crystals selected from the group consisting of diamond, cubic boron nitride and mixtures thereof, which mass is in contact with a source of metallic catalyst/solvent for recrystallization of the abrasive crystals, to conditions of temperature, pressure and time which result in a compact having intercrystal bonding between adjacent crystal grains;

B. recovering the compact produced; and

C. removing substantially all of the metallic phase from the compact of step B; the improvement which comprises:

(i) forming a compact with a sub-divided crystal mass by embedding within the mass of abrasive crystals at least one metallic partition strip of a given shape subdividing the abrasive crystal mass before the mass is subjected to the temperature and pressure conditions of step A, which partition strip is characterized by maintaining segregation between the separate portions of the abrasive crystal mass throughout step A and being sufficiently pliable not to resist the compaction of the abrasive crystal mass; and

(ii) recovering a compact in step C having a shape described at least in part by the partition strip.

2. The improved process as recited in claim 1, wherein step C is accomplished by acid treatment.

3. The improved process as recited in claim 2 wherein the acid treatment comprises contacting the compact from step B first with a hot mixture of nitric and hydrofluoric acids and secondly with a hot mixture of hydrochloric and nitric acids.

4. The improved process as recited in claim 1 wherein the partition strip material is other than the catalyst/solvent for the abrasive crystals used in step A.

5. The improved process as recited in claim 4 wherein the partition strip material has a melting point at least slightly higher than that of the catalyst/solvent of step A under conditions of the high pressure/high temperature process in step A.

6. The improved process as recited in claim 1 wherein the mass of abrasive crystals and the catalyst/solvent source are placed within a protective shield metal enclosure disposed within the reaction zone of a high pressure/high temperature apparatus for carrying out Step A.

7. The improved process as recited in claim 1 wherein the partition strip material is selected from the group consisting of a Group III B, IV B, V B, VI B, VII B, and VIII metals and their alloys.

8. The improved process as recited in claim 1 wherein the partition strip material is selected from the group consisting of molybdenum, nickel-copper alloys, stainless steel, tantalum, titanium, iron, nickel and zirconium.

9. The improved process of claim 8 wherein the partition strip material is selected from the group consisting of nickel, iron and their alloys.

10. The improved process as recited in claim 1 wherein the partition strip material is selected from the group consisting of copper and its alloys.

11. The improved process as recited in claim 1 wherein the partition strip describes at least one closed shape.

12. The improved process as recited in claim 1 wherein there is more than one partition strip and the strips comprise a plurality of shapes joined in a bundle.

13. The improved process as recited in claim 1 wherein the catalyst/solvent source comprises a catalyst/solvent material mixed with the abrasive crystals.

14. The improved process as recited in claim 1, wherein the catalyst/source comprises a mass of catalyst/solvent material in contact with the abrasive crystal mass.

15. In a process for preparing a compact which comprises:

A. subjecting a mass of abrasive crystals selected from the group consisting of diamond, cubic boron nitride and mixtures thereof, which mass is in contact with a mass of metal carbide containing a cementing agent which is a catalyst/ solvent for recrystallization of the abrasive crystals, to conditions of temperature, pressure and time which result in a compact; and

B. recovering the composite compact produced; the improvement which comprises embedding within the mass of abrasive crystals, before it is subjected to the pressure and temperature conditions of step A, at least two partition strips extending through the shortest dimension of the abrasive crystal mass which partition strips are characterized by maintaining segregation between the separate portions of the abrasive crystal mass throughout step A and being sufficiently pliable not to resist the compaction of the abrasive crystal mass.

16. The improved process as recited in claim 15, wherein the partition strip material is other than the catalyst/solvent for the abrasive crystals used in step A.

17. The improved process as recited in claim 16 wherein the partition strip material has a melting point at least slightly higher than that of the catalyst/solvent of step A under conditions of the high pressure/high temperature process in step A.

18. The improved process as recited in claim 15 wherein the mass of abrasive crystals and the catalyst/solvent source have been placed within a protective shield metal enclosure which is disposed within the reaction zone of a high pressure/high temperature apparatus.

19. The improved process as recited in claim 16 wherein the reaction zone is cylindrical in shape, and the partition strips are oriented parallel to the axis of the reaction zone.

20. The process as recited in claim 15 which further comprises removing the exposed parts of the partition strips from the compacts recovered in step B in order to produce multiple, free standing polycrystalline abrasive crystal zones on the surface of the compact.

21. The improved process of claim 15, wherein the metal carbide is selected from the group consisting of tantalum carbide, titanium carbide, and tungsten carbide.

22. The improved process of claim 15 wherein the partition strips are extended into the metal carbide.

23. The improved process as recited in claim 15 wherein the partition strip material is selected from the group consisting of a Group III B, IV B, V B, VI B, VII B, and VIII metals and their alloys.

24. The improved process as recited in claim 15 wherein the partition strip material is selected from the group consisting of molybdenum, nickel-copper alloys, stainless steel, tantalum, titanium, iron, nickel and zirconium.

25. The improved process of claim 24 wherein the partition strip material is selected from the group consisting of nickel, iron and their alloys.

26. The improved process as recited in claim 15 wherein the partition strip material is selected from the group consisting of copper and its alloys.

27. The improved process as recited in claim 15 wherein the partition strips described closed shapes.

28. An improved composite compact comprising:
   (a) a polycrystalline mass of abrasive grains selected from the group consisting of diamond, cubic boron nitride, and mixtures thereof bonded to a substrate material comprising
   (b) a cemented metal carbide wherein the cementing agent is a catalyst/solvent, said abrasive grains, in random orientation, being directly bonded to adjacent crystal grains in said mass thereof by intercrystal bonding; wherein the improvement comprises at least two partition strips subdividing the polycrystalline mass of abrasive grains, embedded within the polycrystalline mass and extending through its shortest dimension.

29. The improved composite compact of claim 28 in which the partition strips extend into the cemented metal carbide mass.

30. In a process for preparing a compact which comprises:
   A. subjecting a raw material selected from the group consisting of graphite, hexagonal boron nitride, and wurtzite boron nitride, in the presence of a catalyst for diamond or cubic boron nitride crystallization, to conditions of pressure, temperature and time which result in a compact having a polycrystalline mass made of a material selected from the group consisting of diamond in the case of graphite raw material and cubic boron nitride in the case of hexagonal or wurtzite boron nitride raw material; and

B. recovering the compact produced; the improvement which comprises forming a compact with a subdivided polycrystalline mass by embedding within the raw material, before it is subjected to the pressure and temperature conditions of step A, at least one partition strip characterized by maintaining segregation between the separated portions of the raw material throughout step A, and being sufficiently pliable not to resist compaction of the raw material during step A.

31. The improved process as recited in claim 30 wherein the partition strip material is other than the catalyst/solvent for the abrasive crystals used in step A.

32. The improved process as recited in claim 31 wherein the partition strip material has a melting point at least slightly higher than that of the catalyst/solvent of step A under conditions of the high pressure/high temperature process in step A.

33. The improved process as recited in claim 30 wherein the partition strip material is selected from the group consisting of a Group III B, IV B, V B, VI B, VII B, and VIII metals and their alloys.

34. The improved process as recited in claim 30 wherein the partition strip material is selected from the group consisting of molybdenum, nickel-copper alloys, stainless steel, tantalum, titanium, iron, nickel and zirconium.

35. The improved process of claim 34 wherein the partition strip material is selected from the group consisting of nickel, iron and their alloys.

36. The improved process as recited in claim 30 wherein the partition strip material is selected from the group consisting of copper and its alloys.

37. The improved process as recited in claim 30 wherein the partition strip describes at least one closed shape.

**Patentansprüche**

1. Verfahren zum Herstellen eines Presslings durch:

A. Aussetzen einer Masse aus Schleifkristallen, die ausgewaehlt sind aus der Gruppe bestehend aus Diamant, kubischem Bornitrid und deren Mischungen, wobei sich die Masse in Kontakt mit einer Quelle fuer metallischen Katalysator/Loeusungsmittel fuer die Rekristallisation der Schleifkristalle befindet, gegenueber Bedingungen der Temperatur, des Druckes und der Zeit, die einen Pressling ergeben, der Bindungen zwischen den benachbarten Kristallkoernern aufweist;

B. Gewinnen des hergestellten Presslings und

C. Entfernen im wesentlichen der gesamten metallischen Phase vom nach Stufe B erhaltenen Pressling, gekennzeichnet durch:

(i) Bilden eines Presslings mit einer unterteilten Kristallmasse durch Einbetten mindestens eines metallischen Teilungsstreifens mit einer gegebenen Gestalt, der die Schleifkristallmasse unterteilt, innerhalb der Masse aus Schleifkristallen, bevor die Masse den Bedingungen der Temperatur und des Druckes nach Stufe A ausgesetzt wird, wobei der Teilungsstreifen charakterisiert ist durch Aufrechterhalten einer Segregation zwischen den separaten Teilen der Schleifkristallmasse waehrend der Stufe A und der Teilungsstreifen ausreichend nachgiebig ist, um dem Zusammenpressen der Schleifkristallmasse nicht zu widerstehen, und

(ii) Gewinnen eines Presslings in Stufe C, der eine Gestalt aufweist, die zumindest teilweise durch den Teilungsstreifen beschrieben ist.

2. Verfahren nach Anspruch 1, dadurch gekennzeichnet, dass die Stufe C durch Saeurebehandlung bewerkstelligt wird.

3. Verfahren nach Anspruch 2, dadurch gekennzeichnet, dass die Saeurebehandlung umfasst, dass man den nach Stufe B erhaltenen Pressling zuerst mit einer heissen Mischung aus Salpeter- und Fluorwasserstoffsaeure und dann mit einer heissen Mischung aus Chlorwasserstoff- und Salpetersaeure in Beruehrung bringt.

4. Verfahren nach Anspruch 1, dadurch gekennzeichnet, dass das Material des Teilungsstreifens ein anderes ist als das fuer den Katalysator/Loeusungsmittel fuer die Schleifkristalle, das in Stufe A benutzt wird.

5. Verfahren nach Anspruch 4, dadurch gekennzeichnet, dass das Material des Teilungsstreifens einen Schmelzpunkt aufweist, der mindestens etwas hoeher ist, als des von Katalysator/Loeusungsmittels nach Stufe A unter den Bedingungen des Verfahrens unter hohem Druck und hoher Temperatur nach Stufe A.

6. Verfahren nach Anspruch 1, dadurch gekennzeichnet, dass die Masse aus Schleifkristallen und der Quelle fuer Katalysator/Loeusungsmittel innerhalb einer Metallabschirmung angeordnet wird, die innerhalb der Reaktionszone einer Vorrichtung fuer hohen Druck und hohe Temperatur zur Ausfuehrung der Stufe A angeordnet ist.

7. Verfahren nach Anspruch 1, dadurch gekennzeichnet, dass das Material fuer den Teilungsstreifen ausgewaehlt ist aus der Gruppe bestehend aus den Metallen der Gruppen IIIB, IVB, VB, VIB, VIIB und VIII sowie deren Legierungen.

8. Verfahren nach Anspruch 1, dadurch gekennzeichnet, dass das Material des Teilungsstreifens ausgewaehlt ist aus der Gruppe bestehend aus Molybdaen, Nickel/Kupfer-Legierungen, korrosionsbestaendigem Stahl, Tantal, Titan, Eisen, Nickel und Zirkonium.

9. Verfahren nach Anspruch 8, dadurch gekennzeichnet, dass das Material des Teilungsstreifens ausgewaehlt ist aus der Gruppe bestehend aus Nickel, Eisen und deren Legierungen.

10. Verfahren nach Anspruch 1, dadurch gekennzeichnet, dass das Material des Teilungsstreifens ausgewaehlt ist aus der Gruppe bestehend aus Kupfer und dessen Legierungen.

11. Verfahren nach Anspruch 1, dadurch gekennzeichnet, dass der Teilungsstreifen zumindest eine geschlossene Gestalt beschreibt.

12. Verfahren nach Anspruch 1, dadurch gekennzeichnet, dass mehr als ein Teilungsstreifen benutzt wird und die Teilungsstreifen mehrere Gestalten umfassen, die in einem Buendel vereinigt sind.

13. Verfahren nach Anspruch 1, dadurch gekennzeichnet, dass die Katalysator/Loesungsmittel-Quelle ein Katalysator/Loesungsmittel-Material umfasst, das mit den Schleifkristallen vermischt ist.

14. Verfahren nach Anspruch 1, dadurch gekennzeichnet, dass die Katalysator/Loesungsmittel-Quelle eine Masse aus Katalysator/-Loesungsmittel-Material in Kontakt mit der Schleifkristallmasse umfasst.

15. Verfahren zum Herstellen eines Presslings durch:

A. Aussetzen einer Masse aus Schleifkristallen, die ausgewaehlt sind aus der Gruppe bestehend aus Diamant, kubischem Bornitrid und deren Mischungen, wobei sich die Masse in Kontakt mit einer Masse aus Metallkarbid befindet, das ein Bindemittel enthaelt, das ein Katalysator/-Loesungsmittel fuer die Rekristallisation der Schleifkristalle ist, gegenueber Bedingungen der Temperatur, des Druckes und der Zeit, die zu einem Pressling fuehren, und

B. Gewinnen des hergestellten Verbundpresslings, dadurch gekennzeichnet, dass innerhalb der Masse aus Schleifkristallen, bevor diese den Bedingungen des Druckes und der Temperatur nach Stufe A ausgesetzt wird, mindestens zwei Teilungsstreifen eingebettet werden, die sich ueber die kuerzeste Abmessung der Schleifkristallmasse erstrecken, wobei die Teilungsstreifen dadurch charakterisiert sind, dass sie die Segregation zwischen den separaten Abschnitten der Schleifkristallmasse waehrend der Stufe A aufrecht erhalten und dass sie ausreichend nachgiebig sind, um dem Zusammenpressen der Schleifkristallmasse nicht zu widerstehen.

16. Verfahren nach Anspruch 15, dadurch gekennzeichnet, dass das Material der Teilungsstreifen ein anderes ist, als das des Katalysators/Loesungsmittels fuer die Schleifkristalle, das in Stufe A benutzt wird.

17. Verfahren nach Anspruch 16, dadurch gekennzeichnet, dass das Material des Teilungsstreifens einen Schmelzpunkt hat, der mindestens etwas hoeher ist, als das des Katalysators/Loesungsmittels nach Stufe A unter den Bedingungen des Verfahrens unter hohem Druck und hoher Temperatur in Stufe A.

18. Verfahren nach Anspruch 15, dadurch gekennzeichnet, dass die Masse aus Schleifkristallen und Katalysator/Loesungsmittel-Quelle innerhalb einer metallischen Schutzumhuellung angeordnet ist, die innerhalb der Reaktionszone einer Vorrichtung fuer hohen Druck und hohe Temperatur liegt.

19. Verfahren nach Ansprcuh 16, dadurch gekennzeichnet, dass die Reaktionszone eine zylindrische Gestalt hat und die Teilungstreifen parallel zur Achse der Reaktionszone orientiert sind.

20. Verfahren nach Anspruch 15, dadurch gekennzeichnet, dass die exponierten Teile der Teilungsstreifen von den in Stufe B gewonnenen Presslingen entfernt werden, um mehrere freistehende polykristalline Schleifkristallzonen auf der Oberflaeche des Presslings zu schaffen.

21. Verfahren nach Anspruch 15, dadurch gekennzeichnet, dass das Metallkarbid ausgewaehlt ist aus der Gruppe bestehend aus Tantalkarbid, Titankarbid und Wolframkarbid.

22. Verfahren nach Anspruch 15, dadurch gekennzeichnet, dass die Teilungsstreifen sich in das Metallkarbid erstrecken.

23. Verfahren nach Anspruch 15, dadurch gekennzeichnet, dass das Material der Teilungsstreifen ausgewaehlt ist aus der Gruppe bestehend aus den Metallen der Gruppe IIIB, IVB, VB, VIB, VIIB und VIII sowie deren Legierungen.

24. Verfahren nach Anspruch 15, dadurch gekennzeichnet, dass das Material der Teilungsstreifen ausgewaehlt ist aus der Gruppe bestehend aus Molybdaen, Nickel/Kupfer-Legierungen, korrosionsbestaendigem Stahl, Tantal, Titan, Eisen, Nickel und Zirkonium.

25. Verfahren nach Anspruch 24, dadurch gekennzeichnet, dass das Material der Teilungsstreifen ausgewaehlt ist aus der Gruppe bestehend aus Nickel, Eisen und deren Legierungen.

26. Verfahren nach Anspruch 15, dadurch gekennzeichnet, dass das Material der Teilungsstreifen ausgewaehlt ist aus der Gruppe bestehend aus Kupfer und seinen Legierungen.

27. Verfahren nach Anspruch 15, dadurch gekennzeichnet, dass die Teilungsstreifen geschlossene Formen beschreiben.

28. Verbundpressling aus
(a) einer polykristallinen Masse aus Schleifkoernern ausgewaehlt aus der Gruppe bestehend aus Diamant, kubischem Bornitrid und deren Mischungen, die an ein Substratmaterial gebunden sind, umfassend
(b) ein Sintermetallkarbid, bei dem das Bindemittel ein Katalysator/Loesungsmittel ist, wobei die Schleifkoerner in willkuerlicher Orientierung durch interkristallines Verbinden direkt an benachbarte Kristallkoerner in der genannten Masse gebunden sind, gekennzeichnet durch mindestens zwei Teilungsstreifen, die innerhalb der polykristallinen Masse eingebettet sind, sich ueber ihre kuerzeste Abmessung erstrecken und die polykristalline Masse aus Schleifkoernern unterteilen.

29. Verbundpressling nach Anspruch 28, dadurch gekennzeichnet, dass die Teilungsstreifen sich in die Sintermetallkarbidmasse erstrecken.

30. Verfahren zum Herstellen eines Presslings durch

A. Aussetzen eines Rohmaterials, ausgewaehlt aus der Gruppe bestehend aus Graphit, hexagonalem Bornitrid und Wurtzit-Bornitrid, in Gegenwart eines Katalysators fuer die Kristallisation von Diamant oder kubischem Bornitrid, gegenueber Bedingungen des Druckes, der Temperatur und der Zeit, die zu einem Pressling feuhren, der eine polykristalline Masse aufweist, die aus einem Material hergestellt ist, ausgewaehlt aus der Gruppe bestehend aus Diamant, im Falle von Graphit als Rohmaterial und von kubischem Bornitrit im Falle von hexagonalem oder Wurtzit-Bornitrid als Rohmaterial und

B. Gewinnen des hergestellten Presslings gekennzeichnet durch Bilden eines Presslings mit einer unterteilten polykristallinen Masse durch Einbetten in das Rohmaterial, bevor es den Bedingungen des Druckes und der Temperatur nach Stufe A ausgesetzt wird, mindestens eines Teilungsstreifens, der charakterisiert ist durch Aufrechterhalten der Segregation zwischen den getrennten Abschnitten des Rohmaterials waehrend der Stufe A und der ausreichend nachgiebig ist, dem Zusammenpressen des Rohmaterials waehrend der Stufe A nicht zu widerstehen.

31. Verfahren nach Anspruch 30, dadurch gekennzeichnet, dass das Material des Teilungsstreifens ein anderes ist als das Material des Katalysators/Loesungsmittels fuer die Schleifkristalle, das in Stufe A benutzt wird.

32. Verfahren nach Anspruch 31, dadurch gekennzeichnet, dass das Material des Teilungsstreifens einen Schmelzpunkt hat, der mindestens etwas hoeher ist als der des Katalysators/Loesungsmittels der Stufe A unter den Bedingungen des Verfahrens unter hohem Druck und hoher Temperatur in Stufe A.

33. Verfahren nach Anspruch 30, dadurch gekennzeichnet, dass das Material des Teilungsstreifens ausgewaehlt ist aus der Gruppe bestehend aus den Metallen der Gruppe IIIB, IVB, VB, VIB, VIIB und VIII sowie deren Legierungen.

34. Verfahren nach Anspruch 30, dadurch gekennzeichnet, dass das Material des Teilungsstreifens ausgewaehlt ist aus der Gruppe bestehend aus Molybdaen, Nickel/Kupfer-Legierungen, korrosionsbestaendigem Stahl, Tantal, Titan, Eisen, Nickel und Zirkonium.

35. Verfahren nach Ansprcuh 34, dadurch gekennzeichnet, dass das Material des Teilungsstreifens ausgewaehlt ist aus der Gruppe bestehend aus Nickel, Eisen und deren Legierungen.

36. Verfahren nach Anspruch 30, dadurch gekennzeichnet, dass das Material des Teilungsstreifens ausgewaehlt ist aus der Gruppe bestehend aus Kupfer und seinen Legierungen.

37. Verfahren nach Anspruch 30, dadurch gekennzeichnet, dass der Teilungsstreifen mindestens eine geschlossene Gestallt bescreibt.

## Revendications

1. Dans un procédé de préparation d'un comprimé, qui comprend:

A. La soumission d'une masse de cristaux abrasifs choisis dans le groupe constitué du diamant, du nitrure de bore cubique et de leurs mélanges, masse qui est en contact avec une source de catalyseur/solvant métallique pour la recristallisation des cristaux abrasifs, à des conditions de température, pression et temps qui ont pour résultat un comprimé ayant une liaison intercristalline entre grains de cristaux contigus;

B. La récupération de comprimé produit;

C. L'enlèvement de la quasi-totalité de la phase métallique du comprimé obtenu dans l'étape B; le perfectionnement qui comporte:

(i) la formation d'un comprimé avec une masse cristalline subdivisée de cristaux par encastrement à l'intérieur de la masse de cristaux abrasifs d'au moins une bande métallique de cloisonnement de forme donnée subdivisant la masse de cristaux abrasifs avant que cette masse soit soumise aux conditions de température et de pression de l'étape A, bande de cloisonnement qui est caractérisée par le maintien d'une séparation entre les parties séparées de la masse de cristaux abrasifs pendant toute l'étape A, et par le fait qu'elle est suffisamment souple de manière à ne pas résister au tassement de la masse de cristaux abrasifs;

(ii) la récupération d'un comprimé dans l'étape C ayant une forme définie au moins en partie par la bande de cloisonnement.

2. Procédé perfectionné selon la revendication 1, où l'étape C est exécutée par traitement acide.

3. Procédé perfectionné selon la revendication 2, où le traitement acide comprend la mise en contact du comprimé provenant de l'étape B en premier lieu avec un mélange chaud d'acide nitrique et d'acide fluorhydrique, et en second lieu avec un mélange chaud d'acide chlorhydrique et d'acide nitrique.

4. Procédé perfectionné selon la revendication 4, où le matériau de la bande de cloisonnement est autre que le catalyseur/solvant pour les cristaux abrasifs utilisés dans l'étape A.

5. Procédé perfectionné selon la revendication 4, où le matériau de la bande de cloisonnement a un point de fusion au moins légèrement supérieur à celui de catalyseur/solvant de l'étape A dans les conditions du procédé à haute pression/haute température de l'étape A.

6. Procédé perfectionné selon la revendication 1, où la masse de cristaux abrasifs et la source de catalyseur/solvant sont placées à l'intérieur d'une enceinte métallique à enveloppe de protection disposée à l'intérieur de la zone de réaction d'un dispositif à haute pression/haute température pour l'exécution de l'étape A.

7. Procédé perfectionné selon la revendication 1, où le matériau de la bande de cloisonnement est choisi dans le groupe constitué des métaux des groupes IIIB, IVB, VB, VIB, VIIB, et VIII et leurs alliages.

8. Procédé perfectionné selon la revendication 1, où le matériau de la bande de cloisonnement est choisi dans le groupe constitué du molybdène, des alliages de nickel-cuivre, de l'acier inoxydable, du tantale, du titane, du fer, du nickel et du zirconium.

9. Procédé perfectionné selon la revendication où le matériau de la bande de cloisonnement ·? choisi dans le groupe constitué du nickel, du ·r et de leurs alliages.

10. Procédé perfectionné selon la revendication 1, où le matériau de la bande de cloisonnement est choisi dans le groupe constitué du cuivre et de ses alliages.

11. Procédé perfectionné selon la revendication 1 où la bande de cloisonnement décrit au moins une forme fermée.

12. Procédé perfectionné selon la revendication 1, où il y a plusieurs bandes de cloisonnement, et les bandes comprennent une pluralité de formes réunies en un faisceau.

13. Procédé perfectionné selon la revendication 1, où la source de catalyseur/solvant est constituée d'un matériau catalyseur/solvant mélangé aux cristaux abrasifs.

14. Procédé perfectionné selon la revendication 1, où la source de catalyseur/solvant comporte une masse de matériau catalyseur/solvant en contact avec la masse des cristaux abrasifs.

15. Dans un procédé de préparation d'un comprimé, qui comprend:

A. la soumission d'une masse de cristaux abrasifs choisis dans le groupe constitué du diamant, du nitrure de bore cubique et de leurs mélanges, masse qui est en contact avec une masse de carbure métallique contenant un agent de cémentation qui est un catalyseur/solvant pour la recristallisation des cristaux abrasifs, à des conditions de température, pression et durée qui ont pour résultat un comprimé; et

B. La récupération du comprimé composite produit; le perfectionnement qui comporte l'encastrement à l'intérieur de la masse de cristaux abrasifs, avant sa sousmission aux conditions de pression et de température de l'étape A, d'au moins deux bandes de cloisonnement s'étendant suivant la dimension la plus courte de la masse de cristaux abrasifs; bandes de cloisonnement qui sont caractérisées par le maintien de la séparation entre les parties séparées de la masse de cristaux abrasifs pendant toute l'étape A et par le fait qu'elles sont suffisamment souples pour ne pas résister at tassement de la masse de cristaux abrasifs.

16. Procédé perfectionné selon la revendication 15, où le matériau des bandes de cloisonnement est autre que le catalyseur/solvant pour les cristaux abrasifs utilisées dans l'étape A.

17. Procédé perfectionné selon la revendication 16, où le matériau des bandes de cloisonnement a un point de fusion au moins légèrement supérieur à celui du catalyseur/solvant de l'étape A dans les conditions du procédé à haute pression/haute température de l'étape A.

18. Procédé perfectionné selon la revendication 15, où la masse de cristaux abrasifs et la source de catalyseur/solvant ont été placées à l'intérieur d'une enceinte métallique servant d'enveloppe de protection qui est disposée à l'intérieur de la zone de réaction d'une dispositif à haute pression/haute température.

19. Procédé perfectionné selon la revendication 16, où la zone de réaction a une forme cylindrique, et les bandes de cloisonnement sont orientées parallèlement à l'axe de la zone de réaction.

20. Procédé perfectionné selon la revendication 15, qui comprend en outre l'extraction des parties exposées des bandes de cloisonnement pour les enlever des comprimés obtenus dans l'étape B pour produire sur la surface du comprimé de multiples zones en cristaux abrasifs polycristallins, accessibles de tous les côtés.

21. Procédé perfectionné selon la revendication 15, où le carbure métallique est choisi dans le groupe constitué du carbure de tantale, du carbure de titane, et du carbure de tungstène.

22. Procédé perfectionné selon la revendication 15, où les bandes de cloisonnement s'étendent jusqu'à pénétrer dans le carbure métallique.

23. Procédé perfectionné selon la revendication 15, où le matériau des bandes de cloisonnement est choisi dans le groupe constitué des métaux des groupes IIIB, IVB, VB, VIB, VIIB, et VIII et leurs alliages.

24. Procédé perfectionné selon la revendication 15, où le matériau des bandes de cloisonnement est choisi dans le groupe constitué du molybdène, des alliages de nickel-cuivre, de l'acier inoxydable, du tantale, du titane, du fer, du nickel et du zirconium.

25. Procédé perfectionné selon la revendication 24, où le matériau des bandes de cloisonnement est choisi dans le groupe constitué du nickel, du fer et de leurs alliages.

26. Procédé perfectionné selon la revendication 15, où le matériau des bandes de cloisonnement est choisi dans le groupe constitué du cuivre et de ses alliages.

27. Procédé perfectionné selon la revendication 15, où les bandes de cloisonnement décrivent des formes fermées.

28. Comprimé composite perfectionné, comprenant:

(a) une masse polycristalline de grains abrasifs choisis dans le groupe constitué du diamant, du nitrure de bore cubique, et de leurs mélanges liés à un matériau de substrat comportant:

(b) un carbure métallique cémenté où l'agent de cémentation est un catalyseur/solvant, les grains abrasifs, en orientation aléatoire, étant liés directement à des grains contigus de cristaux dans ladite masse par liaison intercristaline; où le perfectionnement comprend au moins deux bandes de cloisonnement subdivisant la masse polycristalline de grains abrasifs, noyés à l'intérieur de la masse polycristalline et s'étendant suivant sa dimension la plus courte.

29. Comprimé composite perfectionné selon la revendication 28, dans lequel les bandes de cloisonnement s'étendent pour pénétrer dans la masse de carbure métallique cémenté.

30. Dans un procédé de préparation d'un comprimé qui comprend:

A. la soumission d'une matière première choisie dans le groupe constitué du graphite, du nitrure de bore hexagonal et du nitrure de bore de type wurtzite, ne présence d'un catalyseur pour la cristallisation du diamant ou du nitrure de bore cubique, à des conditions de pression, température et durée qui se traduisent par un comprimé ayant une masse polycristalline comportant un matériau choisi dans le groupe constitué du diamant dans le cas où la matière première est du graphite et du nitrure de bore cubique dans le cas où la matière première est du nitrure de bore hexagonal ou de type Wurtzite; et

B. la récupération du comprimé produit; le perfectionnement qui comporte la formation d'un comprimé avec une masse polycristalline subdivisée par encastrement à l'intérieur de la matière première, avant qu'elle soit soumise aux conditions de pression et de température de l'étape A, d'au moins une bande de cloisonnement caractérisée par le maintien de la séparation entre les parties séparées de la matière première au cours de l'étape A, et par le fait qu'elle est suffisamment souple pour ne pas résister au tassement de la matière première au cours de l'étape A.

31. Procédé perfectionné selon la revendication 30, où le matériau des bandes de cloisonnement est autre que le catalyseur/solvant pour les cristaux abrasifs utilisés dans l'étape A.

32. Procédé perfectionné selon la revendication 31, où le matériau des bandes de cloisonnement a un point de fusion au moins légèrement supérieur à celui du catalyseur/solvant de l'étape A dans les conditions du procédé à haute pression/haute température de l'étape A.

33. Procédé perfectionné selon la revendication 30, où le matériau des bandes de cloisonnement est choisi dans le groupe constitué des métaux des groupes IIIB, IVB, VB, VIB, VIIB et VIII de leurs alliages.

34. Procédé perfectionné selon la revendication 30, où le matériau des bandes de cloisonnement est choisi dans le groupe constitué du molybdène, des alliages de nickel-cuivre, de l'acier inoxydable, du tantale, du titane, du fer, du nickel et du zirconium.

35. Procédé perfectionné selon la revendication 34, où le matériau des bandes de cloisonnement est choisi dans le groupe constitué du nickel, du fer et leurs alliages.

36. Procédé perfectionné selon la revendication 30, où le matériau des bandes de cloisonnement est choisi dans le groupe constitué du cuivre et de ses alliages.

37. Procédé perfectionné selon la revendication 30, où la bande de cloisonnement décrit au moins une forme fermée.

FIG. 1

FIG. 2

FIG. 3

FIG. 4

FIG. 5